# EUROPEAN PATENT APPLICATION

(11) **EP 4 848 420 A1**
(43) Date of publication of application: **02.12.2026**
(21) Application number: 26181168.1
(22) Date of filing: 26.05.2026
(51) Int. Cl.: H01M 50/15, H01M 50/16, H01M 50/103, H01M 50/147, H01M 50/159, H01M 50/164, H01M 50/166, H01M 50/169, H01M 50/176, H01M 50/184, H01M 50/186, H01M 50/188, H01M 50/193, H01M 50/342, H01M 50/533

(54) **TOP COVER ASSEMBLY, BATTERY, AND ELECTRICITY-CONSUMPTION DEVICE**

(30) Priority: 27.05.2025 CN 202510688412
(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: SUN, Wei, Shenzhen, 518110 (CN); WANG, Pengcheng, Shenzhen, 518110 (CN); XIAO, Hepan, Shenzhen, 518110 (CN); XU, Weidong, Shenzhen, 518110 (CN); LI, Wenbo, Shenzhen, 518110 (CN)
(74) Representative: Mewburn Ellis LLP

(57) **Abstract**

The present disclosure provides a top cover assembly (100), a battery (200) and an electricity-consumption device (300). The top cover assembly (100) includesa lower plastic member (30), and a top cover (10) provided with at least one hot-melt hole (Q); the lower plastic member (30) includes at least one hot-melt column (T) fixedly connected to at least one hot-melt hole (Q) through a hot-melt process and a lower plastic body (31) which is stacked with the top cover (10). The top cover assembly (100) also includes at least one connecting plate (51) used for welding connection with at least one tab of an electrode assembly (220). In a thickness direction of the top cover assembly (100), a projection of a first hot-melt column (16) on the lower plastic body (31) falls within a projection range of the connecting plate (51) on the lower plastic body (31). Present disclosure can enable the lower plastic member (30) and the top cover (10) to be adhered well with each other.

## Description

### TECHNICAL FIELD

This disclosure relates to the field of energy storage technology, and in particular, to a top cover assembly, a battery, and an electricity-consumption device.

### BACKGROUND

With the development of clean energy, batteries with recyclable characteristics are becoming increasingly popular. The battery usually includes an electrode assembly, a housing and a top cover assembly. The electrode assembly is located in an accommodation space formed by the enclosure of the housing and the top cover assembly. The top cover assembly includes a top cover, a lower plastic member and an explosion-proof valve, the top cover and the lower plastic member are arranged in a stacked manner. However, due to the low strength and easy deformation of the lower plastic member, the lower plastic member cannot adhere well to the top cover.

### SUMMARY

The embodiments of the present disclosure provide a top cover assembly, a battery and an electricity-consumption device, which can enable the lower plastic member and the top cover are adhered well with each other.

In a first aspect, the present disclosure provides a top cover assembly, the top cover assembly includes a top cover and a lower plastic member;
the top cover includes a first surface, the top cover is provided with at least one hot-melt hole, an opening of the at least one hot-melt hole is located on the first surface, and the at least one hot-melt hole includes a first hot-melt hole;
the lower plastic member includes a lower plastic body and at least one hot-melt column. The lower plastic body and the top cover are arranged in a stacked manner. The lower plastic body includes a second surface, the second surface faces the first surface, the at least one hot-melt column is connected to the lower plastic body and protrudes from the second surface. The at least one hot-melt column is fixedly connected to at least one hot-melt hole through a hot-melt process to make the lower plastic body adhere to the top cover. The at least one hot-melt column includes a first hot-melt column, the first hot-melt column is located within the first hot-melt hole.
the top cover assembly also includes a connecting plate, the connecting plate is located on a side of the lower plastic member facing away from the top cover. The connecting plate is configured for welding connection with a tab of an electrode assembly. In a thickness direction of the top cover assembly, a projection of the first hot-melt column on the lower plastic body falls within a projection range of the connecting plate on the lower plastic body.

It is understandable that by setting the hot-melt column on the lower plastic member and the hot-melt hole on the top cover, and fixedly connecting the hot-melt column and the hot-melt hole through the hot-melt process, when the hot-melt column undergoes hot-melt deformation through the hot-melt process, the hot-melt column can closely adhere to the hole wall of the hot-melt hole on the top cover, thus the stability and reliability of the connection between the hot-melt column and the hot-melt hole can be enhanced, so that the lower plastic body and the top cover can also be closely adhered together, and the connection strength between the lower plastic member and the top cover is also enhanced, and the fixed connection between the lower plastic member and the top cover is achieved.

When forming an electrical connection path between the terminal post and the tabs of the electrode assembly, the connecting plate needs to be connected to a terminal post and welded to the tab of the electrode assembly. However, this kind of welding process will cause the temperature in the region where the connecting plate is located to be too high during welding, which is likely to cause the lower plastic member to deform due to heat. Therefore, in order to prevent the lower plastic member from bending and deforming due to excessive welding heat during the welding process, the first hot-melt column is covered by the projection of the connecting plate on the lower plastic member along the thickness direction of the top cover assembly, and the first hot-melt column is set in the region where is prone to thermal deformation, of the lower plastic member, thereby effectively strengthening the connection strength between the lower plastic member and the top cover. Thus the problem of the lower plastic member collapses and the top cover assembly loses efficacy due to the deformation of the lower plastic member caused by heat can be avoided.

In one possible embodiment, the at least one hot-melt hole further includes a second hot-melt hole, and the at least one hot-melt column further includes a second hot-melt column, the second hot-melt column is located within the second hot-melt hole;
the lower plastic member further includes a central boss, the central boss is connected to the lower plastic body and is protruded from a surface of the lower plastic body away from the top cover. In the thickness direction of the lower plastic member, the projection of the second hot-melt column on the lower plastic body is adjacent to the projection of the central boss on the lower plastic body, and the projection of the second hot-melt column on the lower plastic body and the projection of the central boss on the lower plastic body are arranged at intervals in a length direction of the lower plastic member.

In one possible embodiment, the at least one hot-melt hole further includes a third hot-melt hole, and the at least one hot-melt column further includes a third hot-melt column, the third hot-melt column is located within the third hot-melt hole;
the lower plastic member further comprises an edge boss, the edge boss is connected to the lower plastic body and is protruded from the surface of the lower plastic body away from the top cover. The edge boss is located at an end portion of the length direction of the lower plastic body. In the thickness direction of the lower plastic member, the projection of the third hot-melt column on the lower plastic body is located within the projection range of the edge boss on the lower plastic body.

In one possible embodiment, each hot-melt hole comprises a first sub-hole, a second sub-hole and a third sub-hole, an opening of the first sub-hole is located on the first surface, and the first sub-hole, the second sub-hole and the third sub-hole are successively connected along the thickness direction of the lower plastic member 30 and all coaxially arranged;
a size of the first sub-hole along the length direction of the top cover is smaller than a size of the third sub-hole along the length direction of the top cover, and a size of the second sub-hole along the length direction of the top cover gradually increases from the first sub-hole to the third sub-hole;
each hot-melt column is filled into the first sub-hole, the second sub-hole and the third sub-hole hot-melt.

In one possible embodiment, the top cover is further provided with a glue-holding groove, an opening of the glue-holding groove is located on the first surface, the glue-holding groove is arranged around a periphery of the first sub-hole and is in communication with the first sub-hole, and a depth of the glue-holding groove is less than a depth of the first sub-hole.

In one possible embodiment, the top cover is provided with an explosion-proof hole, the explosion-proof hole passes through the top cover along the thickness direction of the top cover;
in the thickness direction of the top cover assembly, the projection of the central boss on the lower plastic body partially overlaps with the projection of the explosion-proof hole on the lower plastic body.

In one possible implementation, the top cover is provided with a positioning hole, an opening of the positioning hole is located on the first surface. In the length direction of the top cover, the positioning hole is arranged between the first hot-melt hole and the third hot-melt hole, and are arranged in sequence;
the lower plastic member also includes a positioning column, the positioning columns is inserted into the positioning hole.

In one possible embodiment, the top cover is provided with a first terminal post hole, and the first terminal post hole passes through the top cover along the thickness direction of the top cover; and
in a width direction of the top cover, a distance between a central axis of the second hot-melt hole and a central axis of the first terminal post hole is different from a distance between a central axis of the positioning hole and the central axis of the first terminal post hole.

In one possible embodiment, the top cover is provided with a first terminal post hole, and the first terminal post hole passes through the top cover along the thickness direction of the top cover; and
in a width direction of the top cover, a distance between a central axis of the first hot-melt hole and a central axis of the first terminal post hole is different from a distance between a central axis of the positioning hole and the central axis of the first terminal post hole.

In one possible embodiment, the top cover is provided with a first terminal post hole, and the first terminal post hole passes through the top cover along the thickness direction of the top cover; and
the third hot-melt hole is located at the end of the top cover in the length direction of the top cover; and in the width direction of the top cover, a distance between the central axis of the third hot-melt hole and the central axis of the first terminal post hole is different from the distance between the central axis of the positioning hole and the central axis of the first terminal post hole.

In one possible embodiment, the top cover further includes a third surface, the third surface and the first surface are arranged opposite to each other in the thickness direction of the top cover, the top cover is caved from the first surface to the third surface to form an extension part, and the extension part is arranged around an outer edge of the top cover, the extension part is used for welding connection with a housing.

In a second aspect, the present disclosure also provides a battery, the battery includes an electrode assembly, a housing and a top cover assembly as described above. The top cover assembly is connected to the housing, and the top cover assembly and the housing enclose to form an accommodation space, and the electrode assembly is located within the accommodation space.

In one possible embodiment, the electrode assembly includes a cell, the cell includes two first side surfaces and two second side surfaces, the two first side surfaces face each other along a width direction of the battery, the two second side surface face each other along a length direction of the battery, and each first side surface is connected between the two second side surface. An area of the first side surface is larger than an area of the second side surface;
therein, the housing includes two first side parts, the two first side parts face each other and are spaced apart along the width direction of the battery, and each first side part faces one first side surface along the width direction of the battery; and
each first side part includes a main body part and a welding part, the welding part is connected to one side of the main body part along a height direction of the battery. An end of the welding part away from the main body part is welded to the top cover, a thickness of the welding part is greater than a thickness of the main body part. In a width direction of the housing, the welding part is spaced from a projection of the cell on the first side part.

In one possible embodiment, the first side part further includes a transition part, the transition part is connected between the welding part and the main body part, and a thickness of the transition part gradually increases from the main body part towards the welding part.

In a third aspect, the present disclosure also provides an electrical device, the electrical device includes the battery as described above.

### BRIEF DESCRIPTION OF THE ACCOMPANYING DRAWINGS

Fig. 1 is a structural schematic diagram of an energy storage system provided in embodiments of the present disclosure;
Fig. 2 is a schematic diagram of the structure of a battery provided in embodiments of the present disclosure;
Fig. 3a is a partial structural schematic diagram of the battery obtained by cutting along a cutting line A-A as shown in Fig. 2;
Fig. 3b is a partial structural schematic diagram of a housing of the battery as shown in Fig. 2;
Fig. 4 is an enlarged structural schematic diagram of a region S as shown in Fig. 3a;
Fig. 5 is a structural schematic diagram of a top cover assembly provided by embodiments of the present disclosure;
Fig. 6 is a schematic diagram of a disassembled structure of the top cover assembly as shown in Fig. 5;
Fig. 7 is a structural schematic diagram viewed from an angle of the top cover of the top cover assembly as shown in Fig. 5;
Fig. 8 is a structural schematic diagram viewed from another angle of the top cover of the top cover assembly as shown in Fig. 5;
Fig. 9 is a structural schematic diagram viewed from further another angle of the top cover of the top cover assembly as shown in Fig. 5;
Fig. 10 is a sectional schematic diagram of a partial structure of the top cover obtained by cutting along a cutting line B-B shown in Fig. 8.
Fig. 11 is a sectional schematic diagram of another partial structure of the top cover obtained by cutting along the cutting line B-B shown in Fig. 8;
Fig. 12 is a sectional schematic diagram of a partial structure of the top cover obtained by cutting along a cutting line C-C as shown in Fig. 8;
Fig. 13 is a sectional diagram of a partial structure of the top cover assembly obtained by cutting along a cutting line E-E as shown in Fig. 5;
Fig. 14 is a structural schematic diagram viewed from an angle of a lower plastic member of the top cover assembly as shown in Fig. 5;
Fig. 15 is a sectional schematic diagram of a partial structure of the top cover assembly obtained by cutting along a cutting line F-F shown in Fig. 5;
Fig. 16 is a sectional schematic diagram of another partial structure of the top cover assembly obtained by cutting along the cutting line F-F shown in Fig. 5;
Fig. 17 is another sectional schematic diagram of a partial structure of the top cover assembly obtained by cutting along a cutting line G-G as shown in Fig. 5.

Description of reference signs of the accompanying drawings:
Energy storage system 400, power conversion device 410, first user load 420, second user load 430, electricity-consumption device 300, battery 200, top cover assembly 100, housing 210, electrode assembly 220, first side part 2110, second side part 2120, main body part 2130, welding part 2140, transition part 2150, top cover 10 upper plastic member 20, lower plastic member 30, terminal post 40, connecting plate 51, sealing ring 52, pressure ring 53, limiting body 54, supporting member 60, heat insulation plate 70, explosion-proof valve assembly 80, first surface 101, third surface 102, first terminal post hole 11, explosion-proof hole 12, installation boss 103, groove 104, positioning hole 13, hot-melt hole Q, second hot-melt hole 14, first sub-hole Q1, second sub-hole Q2, third sub-hole Q3, glue-holding groove 15, first hot-melt hole 16, third hot-melt hole 18, extension part 106, explosion-proof valve 81, explosion-proof valve protection plate 82, lower plastic body 31, positioning column 32, second surface 311, fourth surface 312, second terminal post hole 33, central boss 34, edge boss 35, hot-melt column T, second hot-melt column 36, first hot-melt column 37, third hot-melt column 38.

### DETAILED DESCRIPTION OF ILLUSTRATED EMBODIMENTS

For ease of understanding, the terms involved in the embodiments of the present disclosure are first explained as follows.

The term "and/or": it is merely to describe the association relationship of associated objects, which indicates there can be three types of relationships. For example, A and/or B can represent: the existence of A alone, the coexistence of A and B, and the existence of B alone.

The term "multiple": refers to two or more than two.

The term "connection" or "connect": it should be understood in a broad sense, for instance, when A is connected to B, it can be either A is directly connected to B or A is indirect connected to B through an intermediate medium.

The following will describe technical solutions of embodiments of the present disclosure clearly and completely with reference to the accompanying drawings in embodiments of the present disclosure.

The embodiments of the present disclosure provide a top cover assembly, a battery and an electricity-consumption device.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is known to all, at present, generation of green electric energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage may further damage electric power. Therefore, "curtailment of wind and photovoltaics" may occur due to insufficient power demand or insufficient power-grid admitting ability, and energy storage is required to solve these problems. That is, electric energy is stored by converting it into other forms of energy by physical or chemical means, and energy is released by converting it into electric energy when needed. In brief, energy storage is similar to a large "power bank", which stores electric energy when photovoltaics and wind energy are sufficient and releases stored electric power when needed.

Taking electrochemical energy storage as an example, an electricity-consumption device is provided in the present disclosure. The electricity-consumption device includes an energy storage apparatus, the energy storage apparatus may include one group of chemical batteries. Chemical elements in the chemical batteries can be used as an energy storage medium to implement a charging/discharging process through chemical reaction or change of the energy storage medium. In brief, electric energy generated by solar energy and wind energy is stored in the chemical batteries. When the usage of external electric energy reaches a peak, the power stored in the chemical batteries is released for use, or is transferred to a place where the power is scarce for reuse.

At present, energy storage may be applied in various application scenarios, including power-generation-side energy storage, grid-side energy storage, base-station-side energy storage, user-side energy storage, etc. Corresponding types of energy storage apparatuses include the following:
(1) A large-sized energy storage container applied in a grid-side energy-storage scenario. The energy storage container may serve as a high-quality active and reactive regulation power source in the grid, which can realize matching of electric energy loads in time and space, enhance the capacity for integration of renewable energy, and is of great significance in the backup of the grid system, relieving the pressure of power supply at a peak load, and peak shaving and frequency modulation.
(2) Small and medium-sized energy storage cabinets are used in industrial and commercial energy storage scenarios (banks, shopping malls, etc.) on the user side and small household energy storage boxes used in household energy storage scenarios on the user side. The main operating mode is "peak shaving and valley filling". There is a large price difference in electricity bills at peak and valley according to electricity demand. After users have the energy storage device, in order to reduce costs, they usually charge the energy storage cabinets/boxes during the low electricity price period. During the peak electricity price period, the electricity in the energy storage device is discharged for use to achieve the purpose of saving electricity bills. In addition, in remote regions, as well as regions prone to natural disasters such as earthquakes and hurricanes, the presence of household energy storage apparatuses is equivalent to users providing backup power for themselves and the power grid, eliminating the inconvenience caused by frequent power outages due to disasters or other reasons.c

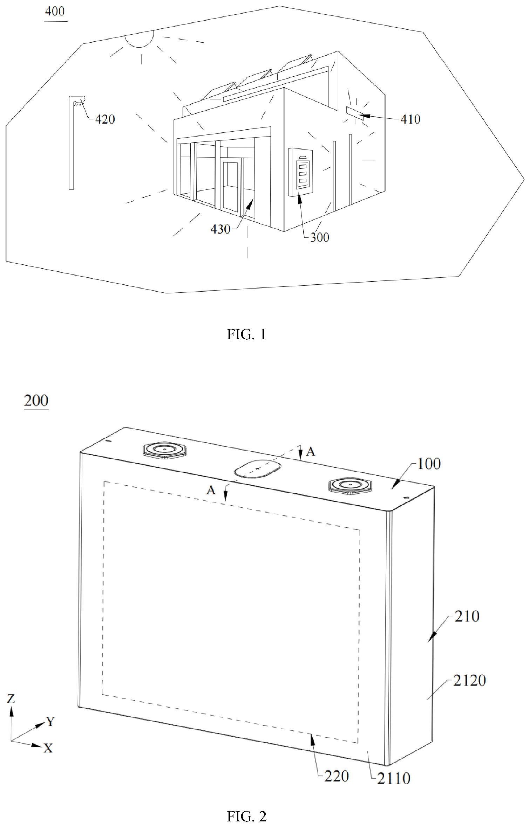

Please refer to Fig. 1, which is a structural schematic diagram of the energy storage system 400 provided by the embodiment of the present disclosure. The embodiments of present disclosure take the household energy storage scenario in user-side energy storage as an example for illustration. The electricity-consumption device 300 of present disclosure is not limited to the household energy storage scenario.

The embodiments of the present disclosure provide an energy storage system 400, the energy storage system 400 includes a power conversion device 410, a first user-side load 420, a second user-side load 430 and an electricity-consumption device 300. The electricity-consumption device 300 can include a small energy storage box that can be wall-mounted on an outdoor wall. In detail, the electricity-consumption device 300 can connect to photovoltaic panels, the photovoltaic panels can convert solar energy into electricity during periods of low electricity prices. The electricity-consumption device 300 can store this electricity and supply it to street lamps and household appliances during peak electricity prices, or provide power when the power grid is cut off.

Therein, the electricity-consumption device 300 can include the energy storage apparatus, the energy storage apparatus can include but is not limited to a battery cell, a battery module, a battery pack, a battery systems, etc. When the electricity-consumption device 300 includes multiple batteries 200, the multiple batteries 200 are electrically connected and all batteries 200 are located inside the housing of the electricity-consumption device 300, and the multiple batteries 200 can be protected by the housing from interference from the external environment. For example, the multiple batteries 200 are arranged at intervals. Therein, the multiple batteries 200 can be connected in series, in parallel, or in a combination of series and parallel connections to achieve larger capacity and power. The embodiments of the present disclosure take the electricity-consumption device 300 includes the battery 200 as an example for illustration, but it should be understood that the electricity-consumption device 300 can includes other types of energy storage apparatus, not limited to the battery 200.

Alternatively, the battery 200 can be a secondary battery, the secondary battery refers to a battery that can be recharged to activate the active material and continue to be used after being discharged. The battery 200 can be lithium-ion batteries, sodium-ion batteries, sodium-lithium-ion batteries, lithium metal batteries, sodium metal batteries, lithium-sulfur batteries, magnesium-ion batteries, nickel-metal-hydride batteries, nickel-cadmium batteries, lead-acid batteries, etc. Present disclosure does not make specific restrictions on this.

Please refer to Fig. 2, which is a structural schematic diagram of the battery 200 provided by an embodiment of the present disclosure.

In order to facilitate to describe, a length direction of the battery 200 is defined as the X direction, a width direction of the battery 200 is defined as the Y direction, and a height direction of the battery 200 is defined as the Z direction in the following text. Therein, the X direction, Y direction and Z direction are mutually perpendicular in pairs.

The battery 200 may include a top cover assembly 100, a housing 210 and an electrode assembly 220. The top cover assembly 100 is connected to the housing 210, and the top cover assembly 100 and the housing 210 enclose to form an accommodation space, that is, the top cover assembly 100 and the housing 210 cooperate with each other to form an accommodation space. The electrode assembly 220 is located within the accommodation space. For example, the top cover assembly 100 can be welded to the housing 210 by a welding process. The housing 210 can be made of metal materials, such as aluminum alloy, etc. The battery 200 can be cylindrical battery 200 or square battery 200, etc.

Therein, the electrode assembly 220 may include at least two cells (not shown in the drawings). At least two cells can be arranged in sequence along a thickness direction of the battery 200, namely the height direction of the battery 200. The capacity of the battery 200 can be increased by setting multiple cells, thereby enabling battery 200 to be used for a long time and expanding its application scenarios. Each cell may include a coil, a first tab and a second tab. Both the first and second tabs are connected to the roll core. The polarities of the first and second tabs are opposite. One is a positive tab and the other is an negative tab.

The cell may include two first side surfaces and two second side surfaces, namely, each cell may include two first side surfaces and two second side surfaces. The two first side surfaces can be set at intervals along the Y direction. The two second sides can be set at intervals along the X direction. Each first side surfaces is connected between the two second side surfaces. An area of the first side surface is larger than an area of the second side surface. That is, the first side surface is the large surface of the cell.

It should be noted that the purpose of Fig. 2 is only to provide a schematic description of the connection relationship among the top cover assembly 100, the housing 210 and the electrode assembly 220, and does not specify the connection positions, specific structures or quantities of each component. The structure indicated by the embodiments of the present disclosure does not constitute a specific limitation on the battery 200. In some other embodiments of the present disclosure, the battery 200 may include more or fewer components than that shown in Fig. 2, or some components of Fig. 2 can be combined or disassembled, or the battery 200 may include may include different components than that shown in Fig. 2 or the components can be arranged different from that shown in Fig. 2. The component shown in Fig. 2 can be implemented in hardware, software, or a combination of software and hardware.

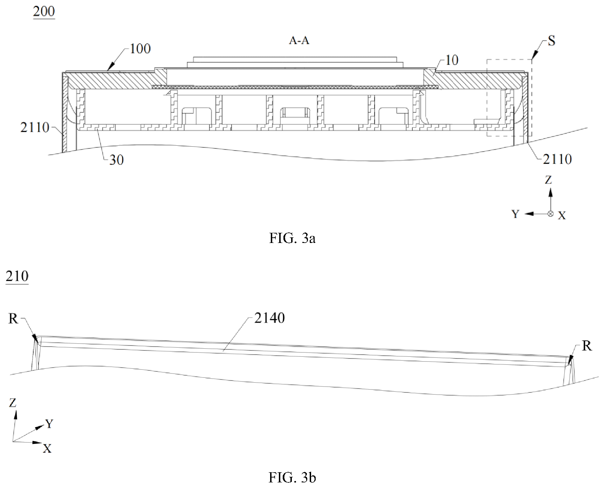

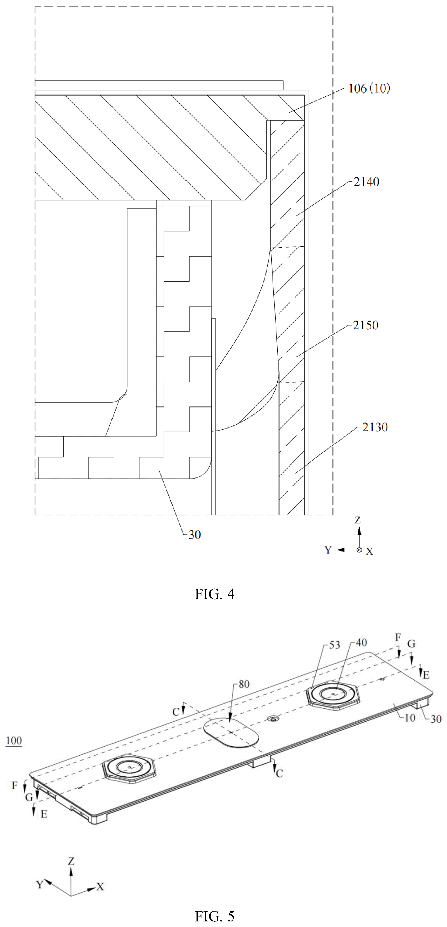

Please refer to Figs. 2, 3a, 3b and 4 in combination. Fig. 3a is a partial structural schematic diagram of the battery 200 obtained by cutting along a cutting line A-A as shown in Fig. 2. Fig. 3b is a partial structural schematic diagram of a housing 210 of the battery 200 as shown in Fig. 2. Fig. 4 is an enlarged structural schematic diagram of a region S as shown in Fig. 3a.

The housing 210 may include two first side parts 2110 and two second side parts 2120. The two first side parts 2110 face each other and are spaced apart along the Y direction. The two second side parts 2120 are face each other and are spaced apart along the X direction. Each first side part 2110 is connected between the two second side parts 2120. Each first side part 2110 faces one of the first side surfaces of the cell along the Y direction.

Each first side part 2110 may include a main body part 2130 and a welding part 2140. The welding part 2140 is connected to one side of the main body part 2130 along the Z direction. An end of the welding part 2140 far from the main part 2130 can cooperate with the second side part 2120 to jointly enclose to form an opening for installing the top cover assembly 100. The end of the welding part 2140 far from the main body 2130 can also be welded to the top cover assembly 100. A thickness of the welding section 2140 can be greater than a thickness of the main body part 2130. In the width direction of the housing 210 (the Y direction as shown in the corresponding drawings), the welding part 2140 is spaced from a projection of the cell on the first side part 2110. That is, the welding part 2140 and the projection of the cell along the width direction of the housing 210 on the first side part 2110 are spaced from each other. That is, a bottom height of the welding part 2140 is higher than the height of the cell.

Therein, an extension dimension of the main body part 2130 along the Z direction can be greater than an extension dimension of the welded part 2140 along the Z direction, so as to make the housing 210 have a lighter weight on the basis of improving the structural strength and connection stability through the welded part 2140. In addition, the welding part 2140 protrudes on one side of the space enclosed by the housing 210 relative to the main body part 2130, that is, the welding part 2140 protrudes from the main body part 2130 towards the space enclosed by the housing 210. This makes the appearance surface shape of the battery 200 more regular, and facilitates the arrangement of multiple batteries 200 close to each other during use and reduces the gap. For example, the thickness of the main body part 2130 can be 0.6mm, and the thickness of the welded part 2140 can be 0.8mm. Furthermore, as shown in Fig. 3b, the welding part 2140 can be set between two transition filleted corners R in a length direction of the housing 210 (the X direction shown in the drawing).

Therein, the housing 210 has an opening and an opening region located at the opening or close to the opening, and the housing 210 is welded to the top cover assembly 100 through the opening region, that is, the opening region can be the region of the housing 210 surrounding the opening. It is understandable that, when the housing 210 is welded to the top cover assembly 100, only the opening region of the housing 210 is welded, therefore, the opening region of the first side part 2110 facing to the large surface of the cell, of the housing 210, is designed as a thickened region, and non-opening regions of the first side part 2110 of the housing 210 is designed as a non-thickened region, namely, the regions of the first side part 2110 close to the opening is designed as the thickened regions, and the other regions of the first side part 2110 are designed as non-thickened areas, and the thickness of the non-opening regions of the first side part 2110 is less than the thickness of the opening region of the first side part 2110. Based of that, on the basis of spending as little cost as possible, which can achieve enhancing the structural strength of the thickened region by increasing the local thickness of the welding region, of the first side part 2110, for welding the top cover assembly 100, so as to ensure that the welding positions between the housing 210 and the top cover assembly 100 can have a large connection region, thereby improving the connection strength, which also ensure a stable and reliable connection between the top cover 10 and the housing 210 and to extend the service life of the weld seam between the top cover 10 and the housing 210. Besides, merely thickening the opening region on the first side part 2110 will not reduce the available space inside the housing 210, which is conducive to ensure the space utilization rate inside the housing 210. In addition, the area of the first side part 2110 of the housing 210 is relatively large and the area of the non-opening regions of the first side part 2110 is relatively large too, when the non-opening region of the large surface (namely the first side part 2110) is not thicken, the maximum cost reduction can be achieved.

Please continue to refer to Figs. 3a and 4, the first side part 2110 further includes a transition part 2150, which is connected between the welding part 2140 and the main body part 2130, therein, a thickness of the transition part 2150 gradually increases from the main body part 2130 towards the welding part 2140.

It is understandable that by connecting the transition part 2150 between the welding part 2140 and the main body part 2130 and making the transition part 2150 present a structure with a gradual thickness change, it is possible to smoothly transition from the main body part 2130 at a smaller thickness to the welding part 2140 at a larger thickness, which is conducive to the dispersion of the stress on the housing 210, and which can avoid the problem of stress concentration at the connection position caused by rapid changes in thickness when the main body part 2130 is directly connected to the welding part 2140.

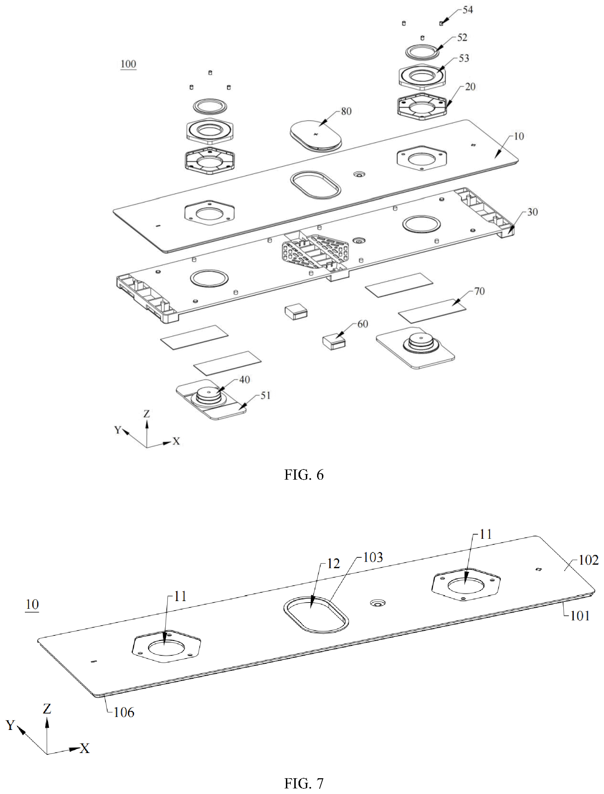

Please refer to Figs. 5 and 6 in combination. Fig. 5 is a structural schematic diagram of the top cover assembly 100 provided by the embodiment of the present disclosure, and Fig. 6 is a disassembled structural schematic diagram of the top cover assembly 100 as shown in Fig. 5.

In this embodiment, the top cover assembly 100 may include the top cover 10, an upper plastic member 20, a lower plastic member 30, a terminal post 40, a connecting plate 51, a sealing ring 52, a pressure ring 53, a limiting body 54, a support member 60, a heat insulation plate 70 and an explosion-proof valve assembly 80.

Both the upper plastic member 20 and the lower plastic member 30 are installed on the top cover 10. The upper plastic member 20 is installed on one side of the top cover 10 along the thickness direction of the top cover 10 (the Z direction as shown in the corresponding drawings), and the lower plastic member 30 is installed on the other side of the top cover 10 along the thickness direction of the top cover 10. Moreover, the lower plastic member 30 and the upper plastic member 20 are respectively protruded from two opposite surfaces of the top cover 10 along the thickness direction of the top cover 10. Therein, the quantity of the lower plastic member 20 can be two. The two upper plastic members 20 are installed at intervals on two sides of the top cover 10 along the length direction of top cover 10 (the X direction as shown in the drawing).

The terminal post 40 is installed on the top cover 10, the upper plastic member 20 and the lower plastic member 30, and is insulated from the top cover 10 through the upper plastic member 20, the lower plastic member 30 and the sealing ring 52. The terminal post 40 can also be led out as an electrode of the battery 200 to achieve an electrical connection between the battery 200 and external devices. Therein, the number of the at least one terminal post 40 can be two. The two terminal posts 40 can be respectively an negative terminal post and a positive terminal post. The two terminal posts 40 can be set at intervals in the length direction of the top cover 10. Each terminal post 40 is installed on the lower plastic member 30, the top cover 10 and one upper plastic member 20.

The connecting plate 51 is located on the side of the lower plastic 30 that is away from the top cover 10, and is connected to the terminal post 40, the connecting plate 51 is also welded to the tab of the electrode assembly 220 to achieve the electrical connection between the terminal post 40 and the electrode assembly 220. Therein, the number of connecting plate 51 can be two. The two connecting plates 51 can be respectively a positive connecting plate and an negative connecting plate. The two connecting pieces 51 can be set at intervals along the length direction of the lower plastic member 30 (the X direction as shown in the corresponding drawings). Therein, each connecting piece 51 is connected to one terminal post 40.

The sealing ring 52 is sleeved on an outside of the terminal post 40 , and is located between the lower plastic member 30 and the terminal post 40, as well as between the top cover 10 and the terminal post 40. The sealing ring 52 can be used to seal the gap between the top cover 10 and the terminal post 40, which prevents from reducing the insulation between the top cover 10 and the terminal post 40 and the safety of the electrode assembly 220 caused by the electrolyte enters the gap between the top cover 10 and the terminal post 40. Therein, the number of the at least one sealing rings 52 can be two. Therein, one sealing ring 52 of the two sealing rings 52 is sleeved on the positive terminal post, and the other sealing ring 52 is sleeved on the negative terminal post.

The pressure ring 53 is installed on the upper plastic member 20 and is sleeved on the outside of the terminal post 40, and is electrically connected to the terminal post 40. Therein, the number of pressure ring 53 can be two. The two pressure rings 53 are respectively installed on the two upper plastic members 20 and electrically connected to the two terminal posts 40.

The limiting body 54 is inserted through the upper plastic member 20 and is located between the pressure ring 53 and the top cover 10. Therein, the number of limiting body 54 can be multiple. Multiple limiting bodies 54 penetrate through the two upper plastic members 20 and are arranged at intervals, and are located between the top cover 10 and the two pressure rings 53. For example, the number of limiting bodies 54 can be six. Therein, three limiting bodies 54 penetrate through one upper plastic 20 and are arranged at intervals and located between the top cover 10 and one pressure ring 53. The other three limiting bodies 54 are penetrate through another upper plastic 20 and are arranged at intervals and located between the top cover 10 and another pressure ring 53.

The support member 60 is installed on the lower plastic member 30 and is located between the lower plastic member 30 and the top cover 10. The support member 60 is in contact with the lower plastic member 30 and can support the top cover 10. The support component 60 can hold the cell and the top cover 10 therebetween and maintain a certain distance between them when the cell occurs thermal runaway. This prevents the battery cell from floating up and approaching the top cover 10, thereby suppressing the splashing of electric sparks out of the explosion-proof valve 81 and reducing the risk of cell fire. For example, the number of the support member 60 can be two. Two support members 60 can face each other and are spaced apart in the Y direction. Each support member 60 is installed on the lower plastic member 30 and is used to support the top cover 10.

The heat insulation plate 70 is located between the lower plastic member 30 and the connecting plate 51 to provide excellent heat insulation. Therein, the number of heat insulation sheet 70 can be four. Two of the heat insulation plates 70 are located between the top cover 10 and one connecting plate 51, and the other two heat insulation plates 70 are located between the top cover 10 and another connecting plate 51.

The explosion-proof valve assembly 80 is installed on the top cover 10 and is used for providing pressure relief protection for the battery 200.

The following text will provide a detailed description of the structure of each component in the top cover assembly 100 and the assemble relationship among them in combination with the attached drawings.

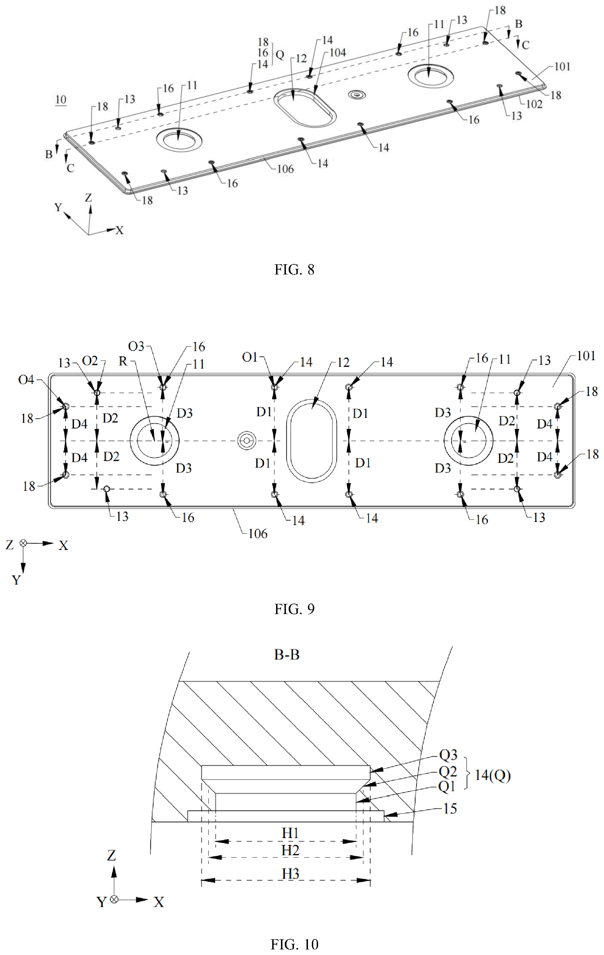

Please refer to Figs. 7, 8 and 9 in combination. Fig. 7 a structural schematic diagram viewed from an angle of the top cover 10 of the top cover assembly 100 as shown in Fig. 5, Fig. 8 is a structural schematic diagram viewed from another angle of the top cover 10 of the top cover assembly 100 as shown in Fig. 5, Fig. 9 is a structural schematic diagram viewed from further another angle of the top cover 10 of the top cover assembly 100 as shown in Fig. 5

The top cover 10 may include a first surface 101 and a third surface 102. The first surface 101 and the third surface 102 can be set opposite each other in the thickness direction of the top cover 10 (the Z direction as shown in the corresponding drawing). Namely, the first surface 101 and the third surface 102 respectively face two opposite directions. Therein, the first surface 101 can face the lower plastic member 30, and the third surface 102 can face away from the lower plastic member 30.

The top cover 10 may be provided with a first terminal post hole 11. The first terminal post hole 11 can pass through the top cover 10 along the thickness direction of the top cover 10 and can be used for the terminal post 40 to pass through respectively. Therein, the number of the first terminal post hole 11 can be two. The two first terminal post holes 11 can be set at intervals in the length direction of the top cover 10 (the X direction as shown in the corresponding drawings). The two first terminal post holes 11 can be respectively used for the positive terminal post 40 and the negative terminal post 40 to pass through.

The top cover 10 can also be equipped with an explosion-proof hole 12. The explosion-proof hole 12 passes through the top cover 10 along the thickness direction of the top cover 10 and is set at intervals with the first terminal post hole 11. For example, the explosion-proof hole 12 can be located between the two first terminal post holes 11. Furthermore, the top cover 10 can be equipped with an installation boss 103 and a groove 104. The installation boss 103 can be set on the third surface 102 and protrude from the third surface 102 in a direction away from the top cover 10. The installation boss 103 can also be arranged around an outer edge of explosion-proof hole 12. The opening of the groove 104 can be located on the first surface 101. The groove 104 can be caved or depressed from the first surface 101 to the inner of the top cover 10. The groove 104 can be coaxially set with the explosion-proof hole 12 and is communicated with the explosion-proof hole 12.

The top cover 10 can also be equipped with positioning hole 13. An opening of each positioning hole 13 can be located on the first surface 101. The positioning hole 13 can be caved or depressed from the first surface 101 to the inner the top cover 10. The positioning hole 13 can be located on the side of the first terminal post hole 11 that is away from the explosion-proof hole 12, and is set at intervals from both the first pole post hole 11 and the explosion-proof hole 12. Therein, the positioning hole 13 can be a blind hole.

Therein, the number of the positioning hole 13 can be multiple. The structures of multiple positioning holes 13 can be similar, identical or different. Multiple positioning holes 13 can be distributed on both sides of the length direction of the top cover 10 and on both sides of the width direction of the top cover 10 (the Y direction as shown in the corresponding drawings). Multiple positioning holes 13 can be set at intervals with the explosion-proof hole 12 and the two first terminal post holes 11.

For example, the number of positioning holes 13 can be four. Among the four positioning holes 13, they can be divided into two groups of positioning holes 13 based on two positioning holes 13 as a group. Two groups of positioning holes 13 can be respectively located on both sides of the length direction of the top cover 10 (such as symmetrical distribution). Among the two positioning holes 13 in the same group of positioning hole 13, the two positioning holes 13 can also be respectively located on both sides of the width direction of the top cover 10 (such as symmetrical distribution).

The top cover 10 can also be provided with at least one hot-melt hole Q. An opening of at least one hot-melt hole Q can be located on the first surface 101. At least one hot-melt hole Q can be caved or depressed from the first surface 101 to the inner of the top cover 10. A depression depth of the at least one hot-melt hole Q relative to the first surface 101 can be greater than a depression depth of the positioning hole 13 relative to the first surface 101.

Please refer to Figs. 8 and 10 in combination. Fig. 10 is a sectional schematic diagram of a partial structure of the top cover 10 obtained by cutting along a cutting line B-B as shown in Fig. 8.

Each hot-melt hole Q may include a first sub-hole Q1, a second sub-hole Q2 and a third sub-hole Q3. An opening of the first sub-hole Q1 is located on the first surface 101. The first sub-hole Q1, the second sub-hole Q2 and the third sub-hole Q3 can be communicated in sequence along the thickness direction of the lower plastic member 30 and are coaxially arranged, namely the central axes of the first sub-hole Q1, the second sub-hole Q2 and the third sub-hole Q3 coincide with each other. Therein, a dimension H1 of the first sub-hole Q1 along the length direction of the top cover 10 (the X direction shown in the drawings) is less than a dimension H3 of the third sub-hole Q3 along the length direction of the top cover 10. A dimension H2 of the second sub-hole Q2 along the length direction of the top cover 10 can gradually increase from the first sub-hole Q1 to the third sub-hole Q3.

In one possible implementation, as shown in Fig. 10, the top cover 10 may also be provided with a glue holding groove 15. An opening of each glue holding groove 15 can be located on the first surface 101. The glue holding groove 15 can be formed by caved or depressed from the first surface 101 to the inner of the top cover 10. The glue holding groove 15 can be arranged around the opening of the hot-melt hole Q and be communicated to the hot-melt hole Q. For example, the glue holding groove 15 can be arranged around the periphery of the first sub-hole Q1 hot-meltand be communicated to the first sub-hole Q1. A depth of the glue holding groove 15 can be less than a depth of of the first sub-hole Q1.

Please refer to Figs. 8, 9 and 10 in combination. In the embodiments of the present disclosure, the at least one hot-melt hole Q may include a combination of at least one or more of a first hot-melt hole 16, a second hot-melt hole 14 and a third hot-melt hole 18. For example, the at least one hot-melt hole Q may include the first hot-melt hole 16, or include the first hot-melt hole 16 and the second hot-melt hole 14, or include the first hot-melt hole 16, the second hot-melt hole 14 and the third hot-melt hole 18.

An opening of the second hot-melt hole 14 namely the opening of each second hot-melt hole 14, can be located on the first surface 101. The second hot-melt hole 14 can be caved or depressed from the first surface 101 to the inner of the top cover 10. A depression depth of the second hot-melt hole 14 relative to the first surface 101 can be greater than the depression depth of the positioning hole 13 relative to the first surface 101. The second hot-melt hole 14 can be located between the first terminal post hole 11 and the explosion-proof hole 12, and is set at intervals from both the first pole post hole 11 and the explosion-proof hole 12. The second hot-melt hole 14 can be set adjacent to the explosion-proof hole 12. The second hot-melt hole 14 can be a blind hole. Therein, the second hot-melt hole 14 can include the first sub-hole Q1, the second sub-hole Q2 and the third sub-hole Q3. The outer side of the first sub-hole Q1 of the second hot-melt hole 14 is surrounded by the glue holding groove 15.

In the width direction of the top cover 10, a distance D1 between a central axis O1 of the second hot-melt hole 14 and a central axis R of the first terminal post hole 11 can be different from a distance D2 between the central axis O2 of the positioning hole 13 and the central axis R of the first terminal post hole 11. Therefore, the positioning hole 13 used for positioning and the second hot-melt hole 14 used for fixation can be quickly distinguished based on the different distances from the first terminal post hole 11, which plays a certain anti-misalignment role and avoids the problem of misassembly between various holes, which is conducive to improving the assembly efficiency and accuracy of the top cover assembly 100. For example, the distance D1 between the central axis O1 of the second hot-melt hole 14 and the central axis R of the first terminal post hole 11 can be greater than the distance D2 between the central axis O2 of the positioning hole 13 and the central axis R of the first terminal post hole 11. In some other embodiments, the distance D1 between the central axis O1 of the second hot-melt hole 14 and the central axis R of the first terminal post hole 11 can also be less than or equal to the distance D2 between the central axis O2 of the positioning hole 13 and the central axis R of the first terminal post hole 11, and there is no strict restriction on this.

Therein, the number of the at least one second hot-melt hole 14 can be multiple. The structures of multiple second hot-melt holes 14 can be similar, identical or different. Multiple second hot-melt holes 14 can be distributed on both sides of the explosion-proof hole 12 along the length direction of the top cover 10, and on both sides of the explosion-proof hole 12 along the width direction of the top cover 10.

For example, the number of the second hot-melt hole 14 can be four. Among the four second hot-melt holes 14, they can be divided into two first hole groups based on two second hot-melt holes 14 as one group. The two first hole groups can be respectively located on both sides of the explosion-proof hole 12 along the length direction of the top cover 10 (such as symmetrical distribution). Among the two second hot-melt holes 14 in the same first hole group, the two second hot-melt holes 14 can also be respectively located on both sides of the explosion-proof hole 12 along the width direction of the top cover 10 (such as symmetrical distribution).

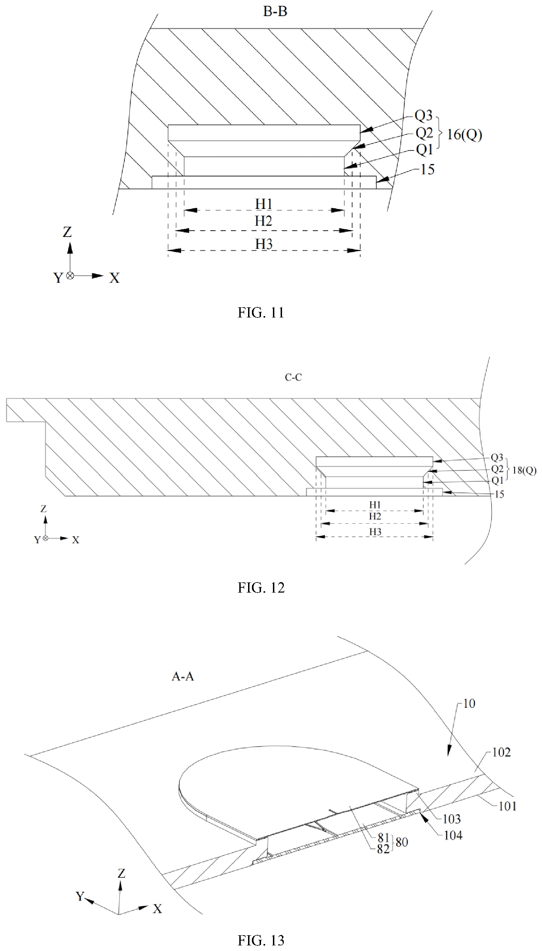

Please refer to Figs. 8, 9 and 11 in combination. Fig. 11 is a sectional schematic diagram of another partial structure of the top cover obtained by cutting along the cutting line B-B shown in Fig. 8.

An opening of the first hot-melt hole 16 namely the opening of each first hot-melt hole 16, can be located on the first surface 101. The first hot-melt hole 16 can be caved or depressed from the first surface 101 to the inner of the top cover 10. A depression depth of the first hot-melt hole 16 relative to the first surface 101 can be greater than the depression depth of the positioning hole 13 relative to the first surface 101. The first hot-melt hole 16 can be located between the positioning hole 13 and the second hot-melt hole 14, and is set at intervals with the positioning hole 13, the second hot-melt hole 14, the first terminal post hole 11 and the explosion-proof hole 12. The first hot-melt hole 16 can be set adjacent to the first terminal post hole 11. The first hot-melt hole 16 can be a blind hole. Therein, the first hot-melt hole 16 can include the first sub-hole Q1, the second sub-hole Q2 and the third sub-hole Q3. Therein, the outer side of the first sub-hole Q1 of the first hot-melt hole 16 is surrounded by the glue holding groove 15. The first hot-melt hole 16 can be covered by the projection of the connecting plate 51 along the Z-direction on the top cover 10. Under this setting, the first hot-melt hole 16 can be located in the connection region between the connecting plate 51 and the tab of the electrode assembly 220.

In the width direction of the top cover 10, the distance D3 between the central axis O3 of the first hot-melt hole 16 and the central axis R of the first terminal post hole 11 can be different from the distance D2 between the central axis O2 of the positioning hole 13 and the central axis R of the first terminal post hole 11. Therefore, the positioning hole 13 used for positioning and the first hot-melt hole 16 used for fixation can be quickly distinguished based on the different distances from the first terminal post hole 11, which plays a certain anti-misalignment role and avoids the problem of misassembly between various holes, which is conducive to improving the assembly efficiency and accuracy of the top cover assembly 100. For example, the distance D3 between the central axis O3 of the first hot-melt hole 16 and the central axis R of the first terminal post hole 11 can be greater than the distance D2 between the central axis O2 of the positioning hole 13 and the central axis R of the first terminal post hole 11. In some other embodiments, the distance D3 between the central axis O3 of the first hot-melt hole 16 and the central axis R of the first terminal post hole 11 can also be less than or equal to the distance D2 between the central axis O2 of the positioning hole 13 and the central axis R of the first terminal post hole 11, and there is no strict restriction on this. Furthermore, the distance D3 between the central axis O3 of the first hot-melt hole 16 and the central axis R of the first terminal post hole 11 can be the same as or different from the distance D1 between the central axis O1 of the second hot-melt hole 14 and the central axis R of the first terminal post hole 11.

Therein, the number of the first hot-melt hole 16 can be multiple. The structures of multiple first hot-melt holes 16 can be similar, identical or different. Multiple first hot-melt holes 16 can be distributed on both sides of the length direction of the top cover 10, and each first terminal post hole 11 can be distributed on both sides of the top cover 10 along the width direction of the top cover 10.

For example, the number of the first hot-melt hole 16 can be four. Among the four first hot-melt holes 16, they can be divided into two second hole groups based on two first hot-melt holes 16 as one group. The two second hole groups can be respectively located on both sides of the top cover 10 along the length direction of the top cover 10 (such as symmetrical distribution). Among the two first hot-melt holes 16 in the same second hole group, the two first hot-melt holes 16 can also be respectively located on both sides of one first terminal post hole 11 along the width direction of the top cover 10 (such as symmetrical distribution).

Please refer to Figs. 8, 9 and 12 in combination. Fig. 12 is a sectional diagram of a partial structure of the top cover 10 obtained by cutting along the cutting line C-C shown in Fig. 8.

An opening of the third hot-melt hole 18 namely the opening of each third hot-melt hole 18, can be located on the first surface 101. The third hot-melt hole 18 can be caved or depressed from the first surface 101 to the inner of the top cover 10. A depression depth of the third hot-melt hole 18 relative to the first surface 101 can be greater than the depression depth of the positioning hole 13 relative to the first surface 101. The third hot-melt hole 18 can be located at the end of the top cover 10 in the length direction of the top cover 10. The third hot-melt hole 18 can also be located on the side of the positioning hole 13 that is away from the first hot-melt hole 16, and it is set at intervals with the positioning hole 13, the second hot-melt hole 14, the first hot-melt hole 16, the first terminal post hole 11 and the explosion-proof hole 12. Namely, each positioning hole 13 is arranged between one first hot-melt hole 16 and one third hot-melt hole 18, and the first hot-melt hole 16, the positioning hole 13 and the third hot-melt hole 18 are arranged in sequence. Therein, the third hot-melt hole 18 can be a blind hole. Therein, the third hot-melt hole 18 can include the first sub-hole Q1, the second sub-hole Q2 and the third sub-hole Q3. Therein, the outer side of the first sub-hole Q1 of the third hot-melt hole 18 is surrounded by the glue holding groove 15.

In the width direction of the top cover 10, a distance D4 between the central axis O4 of the third hot-melt hole 18 and the central axis R of the first terminal post hole 11 can be different from the distance D2 between the central axis O2 of the positioning hole 13 and the central axis R of the first terminal post hole 11. Therefore, the positioning hole 13 used for positioning and the third hot-melt hole 18 used for fixation can be quickly distinguished based on the different distances from the first terminal post hole 11, which plays a certain anti-misalignment role and avoids the problem of misassembly between various holes, which is conducive to improving the assembly efficiency and accuracy of the top cover assembly 100. For example, the distance D4 between the central axis O4 of the third hot-melt hole 18 and the central axis R of the first terminal post hole 11 can be less than the distance D2 between the central axis O2 of the positioning hole 13 and the central axis R of the first pole post hole 11. In some other embodiments, the distance D4 between the central axis O4 of the third hot-melt hole 18 and the central axis R of the first pole post hole 11 can also be greater than or equal to the distance D2 between the central axis O2 of the positioning hole 13 and the central axis R of the first terminal post hole 11, and there is no strict restriction on this. Furthermore, the distance D4 between the central axis O4 of the third hot-melt hole 18 and the central axis R of the first terminal post hole 11 can be the same as or different from the distance D1 between the central axis O1 of the second hot-melt hole 14 and the central axis R of the first terminal post hole 11. In some embodiments, the distance D4 between the central axis O4 of the third hot-melt hole 18 and the central axis R of the first terminal post hole 11 can also be the same as or different from the distance D3 between the central axis O3 of the first hot-melt hole 16 and the central axis R of the first terminal post hole 11.

Therein, the number of the third hot-melt hole 18 can be multiple. The structures of multiple third hot-melt holes 18 can be similar, identical or different. Multiple third hot-melt holes 18 can be distributed on both sides of the top cover 10 in the length direction and the width direction of the top cover 10.

For example, the number of the third hot-melt hole 18 can be four. Among the four third hot-melt holes 18, they can be divided into two third hole groups based on two third hot-melt holes 18 as one group. The two third hole groups can be respectively located on both sides of the top cover 10 along the length direction of the top cover 10 (such as symmetrical distribution). Among the two third hot-melt holes 18 in the same third hole group, the two third hot-melt holes 18 can also be respectively located on both sides of the top cover 10 along the width direction of the top cover 10 (such as symmetrical distribution).

Please continue to refer to Figs. 7, 8 and 9, the top cover 10 is caved or depressed from the first surface 101 to the third surface 102 to form an extension part 106. The extension part 106 is connected or arranged around the outer edge of the top cover 10. The extension part 106 can be welded to the housing 210.

It is understandable that by setting a circle of extension part 106 on the outer edge of the top cover 10, when the top cover 10 is assembled with the housing 210, the extension part 106 can be used as a step structure located on the outer edge of the top cover 10, which is convenient for the top cover 10 and the housing 210 to cooperate with each other to complete the welding connection of the top cover 10 and the housing 210, and the reliability is better.

Please refer to Fig. 13, which is a sectional diagram of a partial structure of the top cover assembly 100 obtained by cutting along the cutting line E-E shown in Fig. 5.

The explosion-proof valve assembly 80 may include an explosion-proof valve 81 and an explosion-proof valve protection plate 82. The explosion-proof valve 81 and the explosion-proof valve protection plate 82 can both be installed on the top cover 10 and be set successively in the thickness direction of the top cover 10. Specifically, the explosion-proof valve 81 can be located in the groove 104 of the top cover 10 and cover the opening of the explosion-proof hole 12 on the first surface 101 of the top cover 10. The explosion-proof valve protection plate 82 can be connected to the installation boss 103 of the top cover 10 and cover the opening of the explosion-proof hole 12 located on the third surface 102 of the top cover 10. The explosion-proof valve protection plate 82 can also cover the explosion-proof valve 81.

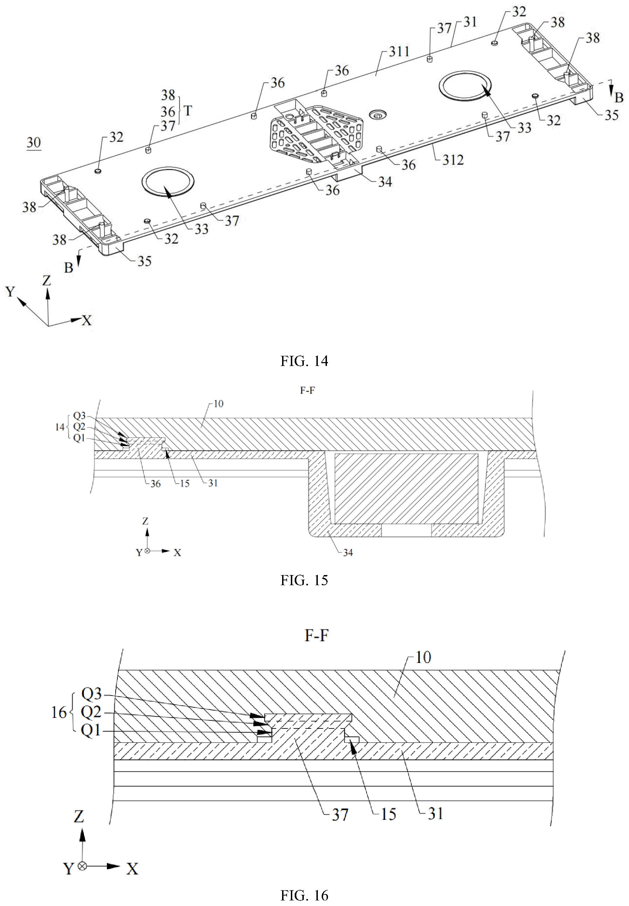

Please refer to Fig. 3a and Fig. 14 in combination. Fig. 14 is a structural schematic diagram viewed from an angle of a lower plastic member 30 of the top cover assembly 100 as shown in Fig. 5.

The lower plastic member 30 and the top cover 10 are arranged in a stacked manner. The lower plastic member 30 can include a lower plastic body 31 and a positioning column 32. The lower plastic body 31 is located on a side of the top cover 10 in the thickness direction of the top cover 10. The lower plastic body 31 may include a second surface 311 and a fourth surface 312. The fourth surface 312 and the second surface 311 can be set opposite each other in the thickness direction of the lower plastic 30 (the Z direction as shown in the drawings). Namely, the fourth surface 312 and the second surface 311 respectively face two opposite directions. Therein, the second surface 311 can be set relative to the first surface 101 of the top cover 10, namely the second surface 311 faces the first surface 101 of the top cover 10, therein, the fourth surface 312 can face the electrode assembly 220.

The lower plastic body 31 may be provided with a second pole post hole 33. The second pole post hole 33 can pass through the lower plastic body 31 along the thickness direction of the lower plastic 30 and can be used for the pole post 40 to pass through. The second pole post hole 33 can be connected to the first pole post hole 11 of the top cover 10. Therein, the number of the second pole post hole 33 can be two. The two second pole post holes 33 can be set at intervals along the length direction of the lower plastic body 31 (the X direction as shown in the drawings). The two second pole post holes 33 can be respectively used for the positive pole post 40 and the negative pole post 40 to pass through.

The positioning column 32 can be fixedly connected to the lower plastic body 31 and protrude from the second surface 311 of the lower plastic body 31. The positioning column 32 can be set at intervals from the second pole column hole 33. The positioning column 32 can be inserted into the positioning holes 13 of the lower plastic body 31 to achieve the insertion between the positioning column 32 and the lower plastic body 31. The positioning column 32 can be spaced from a projection of the connecting plate 51 on the lower plastic member 30 along the Z direction.

Therein, the setting position of the positioning column 32 on the lower plastic body 31 can correspond to the setting position of the positioning hole 13 on the top cover 10. The shape of the positioning column 32 can be adapted to the shape of the positioning hole 13 on the top cover 10. The number of positioning columns 32 can be the same as the number of positioning holes 13 on the top cover 10, and both are multiple. The structures of multiple positioning columns 32 can be similar, identical or different. Multiple positioning columns 32 can be distributed on two sides of the lower plastic member 30 along the length direction (the X direction as showing the corresponding drawing(s)) of the lower plastic member 30 and also can be distributed on two sides of the lower plastic member 30 along the width direction (the Y direction as showing the corresponding drawing(s)) of the lower plastic 30. Multiple positioning columns 32 can be set at intervals with the two second pole column holes 33.

For example, the number of positioning columns 32 can be the same as the number of positioning holes 13 on the top cover 10, such as both of them are four. Among the four positioning columns 32, they can be divided into two positioning column groups based on two positioning columns 32 as one group. The two positioning column groups can be respectively located on both sides of the lower plastic member 30 along the length direction of the lower plastic member 30 (such as symmetrical distribution). Among the two positioning columns 32 in the same positioning column group, the two positioning columns 32 can also be respectively located on both sides of the lower plastic member 30 along the width direction of the lower plastic 30 (such as symmetrical distribution).

It is understandable that by setting positioning columns 32 on the lower plastic 30 and positioning holes 13 on the top cover 10, and inserting the positioning columns 32 into the positioning holes 13, the installation and positioning between the lower plastic member 30 and the top cover 10 can be achieved quickly and conveniently, the efficiency and accuracy of assembling the top cover assembly 100 can be improved.

The lower plastic 30 can also include a central boss 34 and an edge boss 35. Both the central boss 34 and the edge boss 35 can be fixedly connected to the lower plastic body 31 and are both protruded from the fourth surface 312 of the lower plastic body 31. Both the center boss 34 and the edge boss 35 can be used to abut against the electrode assembly 220.

Therein, the central boss 34 can be set relative to the explosion-proof hole 12 of the top cover 10 in the Z direction. In the Z direction, the projection of the central boss 34 on the lower plastic body 31 partially overlaps with the projection of the explosion-proof hole 12 on the lower plastic body 31. That is, a part of the central protrusion 34 can be covered by the projection of the explosion-proof hole 12 of the top cover 10 on the lower plastic 30 along the Z-direction . It is understandable that the explosion-proof valve 81 installed at the explosion-proof hole 12 on the top cover 10 will release air when the battery cell occurs thermal runaway, the region where the explosion-proof valve 81 locates is the main force-bearing region when the battery 200 occurs the thermal runaway. By setting the central boss 34 in the region where the explosion-proof hole 12 is located, the support for the top cover 10 can be enhanced, and the use reliability of the top cover assembly 100 can be improved. The number of edge boss 35 can be two. Among the two edge bosses 35, one edge boss 35 is located at one end of the lower plastic body 31 along the length direction of the lower plastic body 3, and the other edge boss 35 is located at the other end of the lower plastic body 31 along the length direction of the lower plastic body 3. That is, along the length direction of the lower plastic 30, one edge boss 35, the center protrusion 34 and another edge boss 35 are set in sequence.

Please refer to Figs. 14 and 15 in combination. Fig. 15 is a sectional schematic diagram of a partial structure of the top cover assembly 100 obtained by cutting along a cutting line F-F shown in Fig. 5.

The lower plastic member 30 can also include at least one hot-melt column T. At least one hot-melt column T is connected to the lower plastic body 31 and protrudes from the second surface 311 of the lower plastic body 31. At least one hot-melt column T can be located within at least one hot-melt hole Q of the top cover 10. At least one hot-melt column T is fixedly connected to at least one hot-melt hole Q of the top cover 10 through the hot-melt process to ensure that the lower plastic body 31 adheres to the top cover 10. At least one hot-melt column T may include a combination of at least one or more of the first hot-melt column 37, the second hot-melt column 36, and the third hot-melt column 38. For example, at least one hot-melt column T may include a first hot-melt column 37, or include a first hot-melt column 37 and a second hot-melt column 36, or include a first hot-melt column 37, a second hot-melt column 36 and a third hot-melt column 38.

The second hot-melt column 36 is connected to the lower plastic body 31 and protrudes from the second surface 311 of the lower plastic body 31. The second hot-melt column 36 can be located between the second pole column hole 33 and the central boss 34, and is set at intervals from both the second pole column hole 33 and the central boss 34. The second hot-melt column 36 can be located within the second hot-melt hole 14 of the top cover 10. The second hot-melt column 36 is fixedly connected to the second hot-melt hole 14 of the top cover 10 through the hot-melt process, so that the lower plastic body 31 adheres to the top cover 10. The second hot-melt column 36 can be adjacent to the projection, along the Z-direction, of the explosion-proof hole 12 of the top cover 10 on the lower plastic member 30 and is spaced from the projection of the explosion-proof hole 12 of the top cover 10. In addition, the second hot-melt column 36 can also be spaced from the projection, along the Z-direction, of the connecting plate 51 on the lower plastic member 30.

Therein, the setting position of the second hot-melt column 36 on the lower plastic body 31 can correspond to the setting position of the second hot-melt hole 14 on the top cover 10. The shape of the second hot-melt column 36 after hot-melting can be adapted to the shape of the second hot-melt hole 14 on the top cover 10. The second hot-melt column 36 can be adjacent to the projection, along the Z-direction projection, of the explosion-proof hole 12 of the top cover 10 on the lower plastic member 30 and is spaced from the projection of the explosion-proof hole 12 of the top cover 10. Before the second hot-melt column 36 is hot-melted and connected to the second hot-melt hole 14, the height of the second hot-melt column 36 can be greater than the depth of the second hot-melt hole 14 to ensure that the second hot-melt column 36 can fill the second hot-melt hole 14 to the greatest extent after hot-melting.

It is understandable that by setting the second hot-melt column 36 on the lower plastic 30 and the second hot-melt hole 14 on the top cover 10, and fixedly connecting the second hot-melt column 36 with the second hot-melt hole 14 on the top cover 10 through the hot-melt process, when the second hot-melt column 36 undergoes hot-melt deformation through the hot-melt process, the second hot-melt column 36 can closely adhere to the hole wall of the second hot-melt hole 14 of the top cover 10, thereby increasing the connection stability and reliability between the second hot-melt column 36 and the second hot-melt hole 14 of the top cover 10, and thereby enabling the lower plastic body 31 and the top cover 10 to also adhere relatively closely, enhancing the connection strength between the lower plastic member 30 and the top cover 10. and achieving the fixed connection between the lower plastic member 30 and the top cover 10.

As shown in Figs. 10 and 15, the second hot-melt column 36 can be filled within the first sub-hole Q1, the second sub-hole Q2 and the third sub-hole Q3 of the second hot-melt hole 14. Namely, each second hot-melt column 36 can be filled within the first sub-hole Q1, the second sub-hole Q2 and the third sub-hole Q3 of the corresponding second hot-melt hole 14.

It can be understood that by making the dimension H1 of the first sub-hole Q1 along the length direction of the top cover 10, the dimension H2 of the second sub-hole Q2 along the length direction of the top cover 10, and the dimension H3 of the third sub-hole Q3 along the length direction of the top cover 10 different, the second hot-melt hole 14 can present a hole structure with cross-sectional changes and is a variable cross-section hole. The hole structure with cross-sectional changes enables the second hot-melt column 36 to deform and fill the second hot-melt hole 14 during the hot-melt connection, thereby presenting a variable cross-section structural form accordingly. This is conducive to enhancing the bonding force between the lower plastic member 30 and the top cover 10 after hot-melt, and improving the connection strength between the lower plastic member 30 and the top cover 10.

Furthermore, there may be a gap between the outer surface of the second hot-melt column 36 and the wall of the glue-holding groove 15 connected to the second hot-melt hole 14.

It is understandable that by setting the glue holding groove 15 and making the glue holding groove 15 encircle the opening of the second hot-melt hole 14, a certain gap space can be reserved at the opening of the second hot-melt hole 14, so that when the second hot-melt column 36 is thermally connected to the second hot-melt hole 14, The reserved glue groove 15 can provide flow space for the excess molten liquid caused by manufacturing tolerances, thereby further enhancing the stability and reliability of the assembly between the lower plastic member 30 and the top cover 10.

In the embodiments of the present disclosure, in the thickness direction of the lower plastic member 30 (the Z direction as shown in the corresponding drawing(s)), the projection of the second hot-melt column 36 on the lower plastic body 31 is adjacent to the projection of the central boss 34 on the lower plastic body 31, and the projections of the second hot-melt column 36 and the central boss 34 on the lower plastic body 31 are arranged at intervals in the length direction of the lower plastic member 30 (the X direction as shown in the corresponding drawing(s)). That is, the projection of the second hot-melt column 36 on the lower plastic body 31 along the thickness direction of the lower plastic member 30 is adjacent to the projection of of the central boss 34 on the lower plastic body 31 along the thickness direction of the lower plastic member 30 and is spaced from the projection of of the central boss 34 on the lower plastic body 31 along the thickness direction of the lower plastic member 30. It is understandable that in the lower plastic member 30, the surrounding area of the central boss 34 is the main force-bearing area when assembling the battery 200. By setting the second hot-melt column 36 close to the central protrusion 34 of the lower plastic member 30, the bonding force between the lower plastic member 30 and the top cover 10 can be effectively enhanced, and the collapse of the lower plastic member 30 at the main force-bearing point can be prevented, thereby enabling the lower plastic member 30 and the top cover 10 to adhere closely.

Therein, the number of the second hot-melt column 36 can be the same as the number of the second hot-melt hole 14 of the top cover 10, and both are multiple. Multiple second hot-melt columns 36 can be distributed on both sides of the central boss 34 along the length direction of the lower plastic member 30, and on both sides of the central boss 34 along the width direction of the lower plastic member 30.

For example, the number of the second hot-melt column 36 can be four. Among the four second hot-melt columns 36, they can be divided into two first column groups based on two second hot-melt columns 36 as one group. The two first columns groups can be respectively located on both sides of the central boss 34 along the length direction of the lower plastic member 30 (such as symmetrically distributed). Among the two second hot-melt columns 36 in the same first column group, the two second hot-melt columns 36 can also be respectively located on both sides of the central boss 34 along the width direction of the lower plastic member 30 (such as symmetrical distribution).

Please refer to Figs. 14 and 16 in combination. Fig. 16 is a sectional schematic diagram of another partial structure of the top cover assembly 100 obtained by cutting along the cutting line F-F shown in Fig. 5.

The first hot-melt column 37 is connected to the lower plastic body 31 and protrudes from the second surface 311 of the lower plastic body 31. The first hot-melt column 37 can be located between the positioning column 32 and the second hot-melt column 36, and is set at intervals from the positioning column 32, the second hot-melt column 36 and the second pole column hole 33. The first hot-melt column 37 can be located within the first hot-melt hole 16 of the top cover 10. The first hot-melt column 37 is fixedly connected to the first hot-melt hole 16 of the top cover 10 through the hot-melt process, so that the lower plastic body 31 adheres to the top cover 10. The first hot-melt column 37 can be adjacent to the second pole column hole 33 and set at intervals.

Therein, the setting position of the first hot-melt column 37 on the lower plastic body 31 can correspond to the setting position of the first hot-melt hole 16 on the top cover 10. The shape of the first hot-melt column 37 after hot-melting can be adapted to the shape of the first hot-melt hole 16 on the top cover 10. Before the first hot-melt column 37 is hot-melted and connected to the first hot-melt hole 16, the height of the first hot-melt column 37 can be greater than the depth of the first hot-melt hole 16 to ensure that the first hot-melt column 37 can fill the first hot-melt hole 16 to the greatest extent after hot-melting.

It is understandable that by setting the first hot-melt column 37 on the lower plastic 30 and the first hot-melt hole 16 on the top cover 10, and fixedly connecting the first hot-melt column 37 with the first hot-melt hole 16 on the top cover 10 through the hot-melt process, when the first hot-melt column 37 undergoes hot-melt deformation through the hot-melt process, the first hot-melt column 37 can closely adhere to the hole wall of the first hot-melt hole 16 of the top cover 10, thereby increasing the connection stability and reliability between the first hot-melt column 37 and the first hot-melt hole 16 of the top cover 10, thereby enabling the lower plastic body 31 and the top cover 10 to also adhere relatively closely, enhancing the connection strength between the lower plastic 30 and the top cover 10, and achieving the fixed connection between the lower plastic 30 and the top cover 10.

As shown in Figs. 11 and 16, the first hot-melt column 37 can be filled within the first sub-hole Q1, the second sub-hole Q2 and the third sub-hole Q3 of the first hot-melt hole 16. Namely, each first hot-melt column 37 can be filled within the first sub-hole Q1, the second sub-hole Q2 and the third sub-hole Q3 of the corresponding first hot-melt hole 16.

It can be understood that by making the dimension H1 of the first sub-hole Q1 along the length direction of the top cover 10, the dimension H2 of the second sub-hole Q2 along the length direction of the top cover 10, and the dimension H3 of the third sub-hole Q3 along the length direction of the top cover 10 different, the first hot-melt hole 16 can present a hole structure with cross-sectional changes and is a variable cross-section hole. The hole structure with cross-sectional changes enables the first hot-melt column 37 to deform and fill the first hot-melt hole 16 during the hot-melt connection, thereby presenting a variable cross-section structural form accordingly. This is conducive to enhancing the bonding force between the lower plastic member 30 and the top cover 10 after hot-melt, and improving the connection strength between the lower plastic member 30 and the top cover 10.

Furthermore, there may be a gap between the outer surface of the first hot-melt column 37 and the wall of the glue-holding groove 15 connected to the first hot-melt hole 16.

It is understandable that by setting up a glue holding groove 15 and having it encircle the opening of the first hot-melt hole 16, a certain gap space can be reserved at the opening of the first hot-melt hole 16, so that when the first hot-melt column 37 is thermally connected to the first hot-melt hole 16, the reserved glue tank 15 can provide flow space for the excess molten liquid caused by manufacturing tolerances, thereby further enhancing the stability and reliability of the assembly between the lower plastic 30 and the top cover 10.

In the embodiments of the present application, in the Z direction, the projection of the first hot-melt column 37 on the lower plastic body 31 falls within the projection range of the connecting plate 51 on the lower plastic body 31. That is, the first hot-melt column 37 is covered by the projection of the connecting sheet 51 on the lower plastic member 30 along the Z-direction.

It is understandable that, when forming an electrical connection path between the terminal post 40 and the tabs of the electrode assembly 220, the connecting plate 51 needs to be connected to the terminal post 40 and welded to the tabs of the electrode assembly 220. However, this kind of welding process will cause the temperature in the region where the connecting plate 51 is located to be too high during welding, which is likely to cause the lower plastic member 30 to deform or bend due to heat. Therefore, in order to prevent the lower plastic member 30 from bending and deforming due to excessive welding heat during the welding process, the first hot-melt column 37 is covered by the projection of the connecting plate 51 on the lower plastic member 30 along the thickness direction, and the first hot-melt column 37 is set in the region where is prone to thermal deformation, of the lower plastic member 30, thereby effectively strengthening the connection strength between the lower plastic member 30 and the top cover 10. Thus the problem of the lower plastic member 30 collapses and the top cover assembly 100 loses efficacy due to the deformation of the lower plastic member 30 caused by heat can be avoided.

Therein, the number of the first hot-melt columns 37 can be the same as the number of the first hot-melt holes 16 on the top cover 10, and both are multiple. Multiple first hot-melt columns 37 can be distributed at intervals within the projection ranges, along the Z-direction, of multiple connecting plates 51 on the lower plastic member 30. Multiple first hot-melt columns 37 can be distributed on both sides of the lower plastic member 30 along the length direction of the lower plastic member 30, and can be distributed on both sides of each second column hole 33 along the width direction of the lower plastic member 30.

For example, the number of the first hot-melt column 37 can be four. Among the four first hot-melt columns 37, they can be divided into two second column groups based on two first hot-melt columns 37 as one group. The two second column groups can be respectively located on both sides of the lower plastic member 30 along the length direction of the lower plastic member 30 (such as symmetrical distribution). Among the two first hot-melt columns 37 in the same second column group, the two first hot-melt columns 37 can also be respectively located on both sides of the second pole column hole 33 along the width direction of the lower plastic 30 (such as symmetrical distribution). Each first hot-melt column 37 can be covered by the projection of one connecting plate 51 on the lower plastic 30 along the Z-direction. The two first hot-melt columns 37 of the same group can be covered by the projection, along the Z-direction, of the same connecting plate51 on the lower plastic 30.

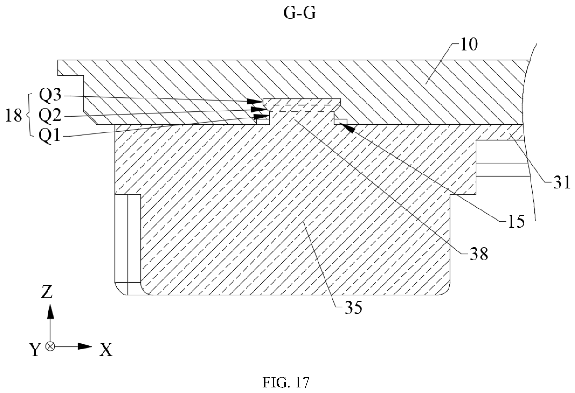

Please refer to Figs. 14 and 17 in combination. Fig. 17 is another sectional schematic diagram of a partial structure of the top cover assembly 100 obtained by cutting along a cutting line G-G as shown in Fig. 5.

The third hot-melt column 38 is connected to the lower plastic body 31 and protrudes from the second surface 311 of the lower plastic body 31. The third hot-melt column 38 can be located at the end of the lower plastic member 30 along the length direction of the lower plastic member 30. The third hot-melt column 38 can also be located on the side of the positioning column 32 that is away from the first hot-melt column 37, and the third hot-melt column 38 is spaced from the positioning column 32, the second hot-melt column 36, the first hot-melt column 37, and the second terminal post hole 33. The third hot-melt column 38 can be located within the third hot-melt hole 18 of the top cover 10. The third hot-melt column 38 is fixedly connected to the third hot-melt hole 18 of the top cover 10 through the hot-melt process, so that the lower plastic body 31 adheres to the top cover 10. The third hot-melt column 38 can be adjacent to the second column hole 33 and is spaced from the second column hole 33. Furthermore, a part of the third hot-melt column 38 can be located within the lower plastic body 31 and the edge boss 35.

Therein, the setting position of the third hot-melt column 38 on the lower plastic body 31 can correspond to setting position of the third hot-melt hole 18 on the top cover 10. The shape of the third hot-melt column 38 after hot-melting can be adapted to the shape of the third hot-melt hole 18 on the top cover 10. Before the third hot-melt column 38 is hot-melted and connected to the third hot-melt hole 18, the height of the third hot-melt column 38 can be greater than the depth of the third hot-melt hole 18 to ensure that the third hot-melt column 38 can fill the third hot-melt hole 18 to the greatest extent after hot-melting.

It is understandable that by setting at least one third hot-melt column 38 on the lower plastic member 30 and at least one third hot-melt hole 18 on the top cover 10, and fixedly connecting the third hot-melt column 38 with the third hot-melt hole 18 on the top cover 10 through the hot-melt process, when the third hot-melt column 38 undergoes hot-melt deformation through the hot-melt process, the third hot-melt column 38 can closely adhere to the hole wall of the third hot-melt hole 18 on the top cover 10, thereby enhancing the connection stability and reliability between the third hot-melt column 38 and the third hot-melt hole 18 on the top cover 10, thereby enabling the lower plastic body 31 and the top cover 10 to also adhere relatively closely, and enhancing the connection strength between the lower plastic 30 and the top cover 10, and achieving the fixed connection between the lower plastic 30 and the top cover 10.

As shown in Figs. 12 and 17, the third hot-melt column 38 can be filled within the first sub-hole Q1, the second sub-hole Q2 and the third sub-hole Q3 of the third hot-melt hole 18. Namely, each third hot-melt column 38 can be filled within the first sub-hole Q1, the second sub-hole Q2 and the third sub-hole Q3 of the corresponding third hot-melt hole 18.

It can be understood that by making the dimension H1 of the first sub-hole Q1 along the length direction of the top cover 10, the dimension H2 of the second sub-hole Q2 along the length direction of the top cover 10, and the dimension H3 of the third sub-hole Q3 along the length direction of the top cover 10 different, the third hot-melt hole 18 can present a hole structure with cross-sectional changes and is a variable cross-section hole. The hole structure with cross-sectional changes enables the third hot-melt column 38 to deform and fill the third hot-melt hole 18 during the hot-melt connection, thereby presenting a variable cross-section structural form accordingly. This is conducive to enhancing the bonding force between the lower plastic member 30 and the top cover 10 after hot-melt, and improving the connection strength between the lower plastic member 30 and the top cover 10.

Furthermore, there may be a gap between the outer surface of the third hot-melt column 38 and the wall of the glue-holding groove 15 connected to the third hot-melt hole 18.

It is understandable that by setting up the glue holding groove 15 and making the glue holding groove 15 encircle the opening of the third hot-melt hole 18, a certain gap space can be reserved at the opening of the third hot-melt hole 18, so that when the third hot-melt column 38 is thermally connected to the third hot-melt hole 18, the reserved glue tank 15 can provide flow space for the excess molten liquid caused by manufacturing tolerances, thereby further enhancing the stability and reliability of the assembly between the lower plastic 30 and the top cover 10.

In the embodiments of the present disclosure, in the thickness direction of the lower plastic member 30, the projection of the third hot-melt column 38 on the lower plastic body 31 falls within the projection range of the edge boss 35 on the lower plastic body 31. That is, the third hot-melt column 38 is covered by the projection, along the thickness direction of the lower plastic member 30, of the edge protrusion 35 on the lower plastic body 31.

It is understandable that, in the lower plastic member 30, the peripheral area of the edge boss 35 is the main force-bearing region when assembling the battery 200. Additionally, there are hot-melt points on the side of the edge protrusion 35, the heat-melt points are used for heat melt connection with the core insulation film during a heat melting process. The temperature during the heat melting process will cause the edge boss of the lower plastic 30 to bend and collapse. Therefore, by setting the third hot-melt column 38 in the region where the edge boss 35 of the lower plastic member 30 is located, the bonding force between the lower plastic member 30 and the top cover 10 can be effectively enhanced, and the collapse stress of the lower plastic member 30 can be evenly distributed to prevent the end of the lower plastic member 30 collapses, thereby enabling the lower plastic member 30 and the top cover 10 to adhere closely and improving the assembly performance of the lower plastic member 30 and the top cover 10.

Therein, the number of the third hot-melt column 38 can be the same as the number of the third hot-melt hole 18 on the top cover 10, and both are multiple. Multiple third hot-melt columns 38 can be distributed on two sides of the lower plastic 30 along the length direction of the lower plastic 30 and distributed on two sides along the width direction of the lower plastic 30.

For example, the number of the third hot-melt column 38 can be four. Among the four third hot-melt columns 38, they can be divided into two third column groups based on two third hot-melt columns 38 as one group. The two third column groups can be respectively located on both sides of the lower plastic member 30 along the length direction of the lower plastic member 30 (such as symmetrical distribution). In the two third hot-melt holes 18 of the same third column group, the two third hot-melt columns 38 can also be respectively located on both sides of the lower plastic member 30 along the width direction of the lower plastic member 30 (such as symmetrical distribution). Each third hot-melt column 38 can be covered by the projection of the edge boss 35 on the lower plastic body 31. The two third hot-melt columns 38 of the same group can be covered by the projection, along the Z-direction, of the same edge boss 35 on the lower plastic body 31.

The above description has provided a detailed introduction to the embodiments of the present disclosure. In present disclosure, specific examples have been applied to elaborate on the principle and implementation method of the present disclosure. The description of the above embodiments is only used to help understand the method and core idea of the present disclosure. At the same time, for those skilled in the art, based on the ideas of present disclosure, there will be changes in the specific implementation methods and application scope. In conclusion, the content of this specification should not be construed as a restriction on present disclosure.

## Claims

1. A top cover assembly (100), comprising:
a top cover (10), comprising a first surface, the top cover (10) being provided with at least one hot-melt hole (Q), an opening of the at least one hot-melt hole (Q) being located on the first surface, and the at least one hot-melt hole (Q) comprising a first hot-melt hole (16);
a lower plastic member (30), comprising a lower plastic body (31) and at least one hot-melt column (T), the lower plastic body (31) and the top cover (10) being arranged in a stacked manner, the lower plastic body (31) comprising a second surface, the second surface facing the first surface, the at least one hot-melt column (T) being connected to the lower plastic body (31) and protrudes from the second surface, the at least one hot-melt column (T) being fixedly connected to at least one hot-melt hole (Q) through a hot-melt process to make the lower plastic body (31) adhere to the top cover (10), the at least one hot-melt column (T) comprising a first hot-melt column (37), the first hot-melt column (37) being located within the first hot-melt hole (16); and
wherein the top cover assembly (100) further comprises a connecting plate (51), the connecting plate (51) is located on a side of the lower plastic member (30) facing away from the top cover (10), the connecting plate (51) is configured for welding connection with a tab of an electrode assembly (220), and in a thickness direction of the top cover assembly (100), a projection of the first hot-melt column (16) on the lower plastic body (31) falls within a projection range of the connecting plate (51) on the lower plastic body (31).

2. The top cover assembly (100) according to claim 1, wherein the at least one hot-melt hole (Q) further comprises a second hot-melt hole (14), and the at least one hot-melt column (T) further comprises a second hot-melt column (36), the second hot-melt column (36) is located within the second hot-melt hole (14); and
wherein the lower plastic member (30) further comprises a central boss (34), the central boss (34) is connected to the lower plastic body (31) and protrudes from a surface of the lower plastic body (31) facing away from the top cover (10); in a thickness direction of the lower plastic member (30), a projection of the second hot-melt column (36) on the lower plastic body (31) is adjacent to a projection of the central boss (34) on the lower plastic body (31), and the projection of the second hot-melt column (36) on the lower plastic body (31) and the projection of the central boss (34) on the lower plastic body (31) are arranged at intervals in a length direction of the lower plastic member (30).

3. The top cover assembly (100) according to claim 2, wherein the at least one hot-melt hole (Q) further comprises a third hot-melt hole (18), and the at least one hot-melt column (T) further comprises a third hot-melt column (38), the third hot-melt column (38) is located within the third hot-melt hole (18); and
wherein the lower plastic member (30) further comprises an edge boss (35), the edge boss (35) is connected to the lower plastic body (31) and protrudes from the surface of the lower plastic body (31) facing away from the top cover (10), the edge boss (35) is located at an end portion of the lower plastic body (31) in a length direction of the lower plastic body (31); in the thickness direction of the lower plastic member (30), a projection of the third hot-melt column (38) on the lower plastic body (31) is located within a projection range of the edge boss (35) on the lower plastic body (31).

4. The top cover assembly (100) according to claim 1 or 2, wherein each hot-melt hole (Q) comprises a first sub-hole (Q1), a second sub-hole (Q2) and a third sub-hole (Q3), an opening of the first sub-hole (Q1) is located on the first surface, and the first sub-hole (Q1), the second sub-hole (Q2) and the third sub-hole (Q3) are communicated in sequence along the thickness direction of the lower plastic member (30) and are coaxially arranged;
wherein a dimension of the first sub-hole (Q1) along a length direction of the top cover (10) is less than a dimension of the third sub-hole (Q3) along the length direction of the top cover (10), and a dimension of the second sub-hole (Q2) along the length direction of the top cover (10) gradually increases from the first sub-hole (Q1) to the third sub-hole (Q3); and
wherein each hot-melt column (T) is filled within the first sub-hole (Q1), the second sub-hole (Q2) and the third sub-hole (Q3) of one corresponding hot-melt hole (Q).

5. The top cover assembly (100) according to claim 4, wherein the top cover (10) is further provided with a glue-holding groove (15), an opening of the glue-holding groove (15) is located on the first surface, the glue-holding groove (15) is arranged around a periphery of the first sub-hole (Q1) and is in communication with the first sub-hole (Q1), and a depth of the glue-holding groove (15) is less than a depth of the first sub-hole (Q1).

6. The top cover assembly (100) according to claim 2, wherein the top cover (10) is provided with an explosion-proof hole (12), the explosion-proof hole (12) passes through the top cover (10) along a thickness direction of the top cover (10); and
wherein in the thickness direction of the top cover assembly (100), the projection of the central boss (34) on the lower plastic body (31) partially overlaps with a projection of the explosion-proof hole (12) on the lower plastic body (31).

7. The top cover assembly (100) according to claim 3, wherein the top cover (10) is provided with a positioning hole (13), an opening of the positioning hole (13) is located on the first surface, in a length direction of the top cover (10), the positioning hole (13) is arranged between the first hot-melt hole (16) and the third hot-melt hole (18), and the first hot-melt hole (16), the positioning hole (13) and the third hot-melt hole (18) are arranged in sequence; and
wherein the lower plastic member (30) further comprises a positioning column (32), the positioning column (32) is inserted into the positioning hole (13).

8. The top cover assembly (100) according to claim 7, wherein the top cover (10) is provided with a first terminal post hole (11), and the first terminal post hole (11) passes through the top cover (10) along the thickness direction of the top cover (10); and
wherein in a width direction of the top cover (10), a distance between a central axis of the second hot-melt hole (14) and a central axis of the first terminal post hole (11) is different from a distance between a central axis of the positioning hole (13) and the central axis of the first terminal post hole (11).

9. The top cover assembly (100) according to claim 7, wherein the top cover (10) is provided with a first terminal post hole (11), and the first terminal post hole (11) passes through the top cover (10) along the thickness direction of the top cover (10); and
wherein in a width direction of the top cover (10), a distance between a central axis of the first hot-melt hole (16) and a central axis of the first terminal post hole (11) is different from a distance between a central axis of the positioning hole (13) and the central axis of the first terminal post hole (11).

10. The top cover assembly (100) according to claim 7, wherein the top cover (10) is provided with a first terminal post hole (11), and the first terminal post hole (11) passes through the top cover (10) along the thickness direction of the top cover (10); and
wherein the third hot-melt hole (11) is located at an end of the top cover (10) in the length direction of the top cover (10); and in the width direction of the top cover (10), a distance between the central axis of the third hot-melt hole (18) and the central axis of the first terminal post hole (11) is different from the distance between the central axis of the positioning hole (13) and the central axis of the first terminal post hole (11).

11. The top cover assembly (100) according to claim 1 or 2, wherein the top cover (10) further comprises a third surface, the third surface and the first surface are arranged opposite to each other in a thickness direction of the top cover (10), the top cover (10) is caved from the first surface to the third surface to form an extension part (106), and the extension part (106) is arranged around an outer edge of the top cover (10), the extension part (106) is configured for welding connection with a housing (210).

12. A battery (200) comprising:
an electrode assembly (220);
a housing (210); and
a top cover assembly (100) as claimed in any of claims 1-11, and
wherein the top cover assembly (100) is connected to the housing (210), and the top cover assembly (100) and the housing (210) enclose to form an accommodation space, and the electrode assembly (220) is located within the accommodation space.

13. The battery (200) according to claim 12, wherein the electrode assembly (220) comprises a cell, the cell comprises two first side surfaces and two second side surfaces, the two first side surfaces face each other along a width direction of the battery (200), the two second side surface face each other along a length direction of the battery (200), and each first side surface is connected between the two second side surface, wherein an area of the first side surface is larger than an area of the second side surface;
wherein the housing (210) comprises two first side parts (2110), the two first side parts (2110) face each other and are spaced apart along the width direction of the battery (200), and each first side part (2110) faces one first side surface along the width direction of the battery (200); and
wherein each first side part (2110) comprises a main body part (2130) and a welding part (2140), the welding part (2140) is connected to one side of the main body part (2130) along a height direction of the battery (200), an end of the welding part (2140) away from the main body part (2130) is welded to the top cover (10), a thickness of the welding part (2140) is greater than a thickness of the main body part (2130), wherein in a width direction of the housing (210), the welding part (2140) is spaced from a projection of the cell on the first side part (2110).

14. The battery (200) according to claim 13, wherein the first side part (2110) further comprises a transition part (2150), the transition part (2150) is connected between the welding part (2140) and the main body part (2130), and a thickness of the transition part (2150) gradually increases from the main body part (2130) towards the welding part (2140).

15. An electricity-consumption device (300), comprising the battery (200) as claimed in any of claims 12-14.
